# EUROPEAN PATENT SPECIFICATION

(11) **EP 4 004 776 B1**
(45) Date of publication and mention of the grant of the patent: **04.09.2024**
(21) Application number: 20740639.8
(22) Date of filing: 21.07.2020
(51) Int. Cl.: G06F 21/31

(54) **A COMPUTER IMPLEMENTED METHOD OF AUTHORIZING A USER OF A COMMUNICATION DEVICE ACCESS TO RESTRICTED CONTENT ON A SERVER**
COMPUTERIMPLEMENTIERTES VERFAHREN ZUR AUTORISIERUNG EINES BENUTZERS EINES KOMMUNIKATIONSGERÄTEZUGRIFFS AUF EINEN BESCHRÄNKTEN INHALT AUF EINEM SERVER
PROCÉDÉ MIS EN OEUVRE PAR ORDINATEUR POUR AUTORISER UN UTILISATEUR D'UN DISPOSITIF DE COMMUNICATION À ACCÉDER À UN CONTENU RESTREINT SUR UN SERVEUR

(30) Priority: 22.07.2019 NL 2023545
(43) Date of publication of application: 01.06.2022
(73) Proprietor: Mobyyou B.V., 5061 HW Oisterwijk (NL)
(72) Inventor: OONK, Johannes Hermanus Petrus Maria, 5045 SN TILBURG (NL); VAN HERP, Petrus Joannes Wilhelmus, 5012 AP TILBURG (NL)
(74) Representative: Algemeen Octrooi- en Merkenbureau B.V.
(86) International application number: PCT/EP2020/070583
(87) International publication number: WO 2021/013850

(56) References cited:
- EP-A1- 3 407 241
- US-A1- 2014 189 809

## Description

The present invention relates to a computer implemented method of authenticating a user to grant the user access to restricted digital content.

The present invention is further related to an authorization server, a webserver, a computer program product, a communication device, and a digital distribution platform server authenticating said user access to said restricted digital content.

Nowadays more and more products are bought through digital platforms such as web shops. In number of merchants which offer and sell more products and services through digital channels then trough conventional physical shops are rapidly increasing and expected to increase even further in the next few years.

The service of online shopping requires that the user, which may visit the online (web) environment of a merchant in an anonymous manner, is authorized to access a certain restricted area of the environment in which restricted content is made accessible for the user. The restricted content could for example be shielded from user which are not authorized and could contain content that is downloadable and contains valuable information for the user. The content could also contain a transaction environment wherein the user may undergo a financial payment transaction to purchase a product or service. In either way, the access to the restricted content should initially be shielded from unauthorized use or users through high levels of security.

With the irreversible increase in volume of the number of online transactions, there is an increasing demand to authorize and/or authenticate users to give them access to restricted content. However, from a privacy and data security point of view, such authorization and authentication must meet a high level of security. High levels of security can often only be guaranteed through authentication procedures which are complex, require plural user actions, and may result in the merchant having to perform cumbersome and complex procedures due to the fact that they have data containing personal information stored on their server(s). Patent application US 2014/189809 A1 discloses a method to access content at a server by using an independent security application at a user's mobile device. When requesting access the server sends a push notification to the secure application for the user to authenticate himself. Patent application EP 3 407 241 A1 provides another example of an independent application on a user's mobile device to perform the authentication process.

The present invention has for its object to provide an improved method of authorizing user of a communication device access to restricted content.

The present invention has for its further object to provide an improved method of authorizing user of a communication device access to restricted content such as a restricted web environment of a website on a webserver through which products or services are offered by a merchant, and wherein the method of authorizing the user is both user-friendly and safe. The invention is defined by the appended claims.

The object is achieved, in a first aspect of the invention, by a computer implemented method of authorizing a user of a communication device access to restricted content on a server, said method comprising the steps of:
- receiving, by an authorization server, a request from said communication device, to access said restricted content;
- requesting, by said authorization server, said user of said communication device to input user credentials;
- obtaining, by said authorization server, said user credentials from said communication device;
- sending, by said authorization server, to an application authenticated by said user with user credentials and running on said communication device, a command for forcing said application on said communication device to an inactive mode, and wherein said application is configured for user interaction in an active mode and for switching from said inactive mode to said active mode upon said user of said communication device to successfully complete a pre-configured personal authentication procedure;
- receiving, by said authorization server, from said application running on said communication device, an acceptance code, upon a successful transition of said application on said communication device from said inactive mode to said active mode;
- authorizing, by said webserver, upon receiving said acceptance code, said user of said communication device to access said restricted content.

The computer implemented method according the first aspect is provided for authorizing a user to access content. Content is to be interpreted in its broadest sense, meaning that the content could for example be a document which contains information material to the user and for which the user for example has paid in order to obtain a downloadable copy thereof. To this end, the server hosting the restricted content may classify users into two groups, i.e. authorized and non-, or unauthorized users. The authorized user may download the document, the unauthorized user may not. Distinction between the user may be performed though a process of obtaining and authenticating the user through their user credentials. As an alternative, the restricted content may also be a secure, restricted area of a website which is for example configured in a dedicated manner for that particular user, or which contains user information of that particular user. It may also contain a personal user environment, e.g. a personal web environment with personal identity data such as first name, surname, address and telephone number. The restricted content may also be a universal or personal financial payment transaction environment through which a transaction is processed for purchasing products from a merchant.

In any of these examples the user is to be authorized before access to the content is cleared. In the first aspect, the method proposes a step of receiving, by an authorization server, a request from a communication device, to access the restricted content. The authorization server is the server which controls the authorization of the user of the communication device which tries to access the restricted content. The authorization server may receive a request for access of that content, either directly from that client, i.e. the communication device, or through a further server such as a webserver which hosts a webserver for access to the restricted content which communicates with a (remote) authorization server to handle the authorization of the user of the communication device.

Once the request is received, either directly or indirectly, the authorization server requests to the user of the communication device to input user credentials. These user credentials may comprise a username, a username and a password, an email address, a user-id or preferably a telephone number of the communication device in case the communication device is a mobile (smart) phone.

The authorization server, once the user credentials, e.g. the telephone number, have been received, sends a message to the communication device, e.g. the smartphone. The communication device or smartphone is running an application which is dedicated for authenticating a user, or is at least configured to authenticate the user of the communication device besides fulfilling other tasks.

Upon receiving the user credentials the authorization server determines the user. This determination of the user may be done by having user identity information which is comprised in the user credentials that have just been received. In example thereof is that these user credentials comprise a name of the user. The credentials may also comprise identity information from which the identity of the user is derivable, e.g. from a user-id, self-chosen username, email address, etc.. The authorization server then initiates a communication with the application that is running on the communication device, e.g. the smartphone. That application is at least installed on the device and may or may not be active and running. The operational modus of such applications may be categorized in two distinct categories, i.e. an active mode and an inactive mode. In the active mode, the user is allowed to interact with the application and the application is the or one of the active and running applications on the operating system of the device. In the inactive mode, the application may be killed, suspended, in a sleep modus or at least the user interaction is limited. If the user wants to use the application, the application should thus be running in the active operational mode. If the application is in the inactive mode, the application should be unlocked, corresponding to screen unlocking procedures available through operating systems on such devices. Upon switching from the inactive mode to the active mode, e.g. unlocking the user interaction of that particular application, the user is prompted to enter a pre-configured personal authentication procedure. This pre-configured personal authentication procedure may be dedicated for that particular application. The procedure may also comprise an unlock routine which is part of the operating system of the device. Modern communication devices such a smartphones, tablets, etc. have support, build-in on an operating system level or even on a kernel level, for such unlock procedures. Examples of such unlock procedures are a passcode, a fingerprint, a password, a facial-recognition, an audio-recognition, a biometrics, or a pattern recognition. As indicated, these procedures may be build-in on operating system level and may be made available for third-part applications such as the application dedicated for the authorization method according to the first aspect. The application may however also have such a separate dedicated unlock procedure.

Once that unlock or pre-configured personal authentication procedure is completed successfully, the authorization server can determine that the users identity is confirmed. In such a case, the authorization server then sends a command to the communication device, and in particular to the application running on the communication device. The application will receive the command, which may be a particular flag set in a certain data package, or a dedicated command, a token, a dedicated unique token, encrypted string, etc. The command forces the application to go into the inactive mode. If the application is in the active mode, it could be instructed to be killed, suspended, to into sleep mode, etc. If the application is already in such a mode, no further action is required. With forcing the application in this mode, the user is required to go through the application unlock procedure. This procedure forces the user to enter a pre-configured personal authentication code, e.g. the fingerprint, the voice or face recognition, or the password, passcode, pattern, etc. Only if this procedure has been completed successfully, the application may return a command of acceptance. This command may be a particular flag set in a certain data package, or a dedicated command, a token, a dedicated unique token, encrypted string, etc..

Upon receipt of the acceptance code or command, the user is considered to be authorized. Once authorized the restricted content is made available to the user through its communication device. This content may or may not be available only through the application or even through third party applications such as the standard web browser on the communication device. The server hosting the restricted content may or may not be the same server as the authorization server. In case it is not the same, the content may be hosted on a web or file server for example, and the authorization is done through the authorization server. In that case, for example, the authorization server may communicate a token to the webserver in order to confirm that the user is authorized to access the content through that token.

In an example, the user credentials comprise a mobile phone number registered to the communication device.

In an example, the user credentials comprises a username or user-id registered to the application running on the communication device.

The user credentials may either be a mobile phone number or also a username, user-id or other code which can be related to the communication device.

In an example, the user credentials used for authenticating the application and the user credentials obtained upon requested by the authorization server comprise the same user credentials.

The user preferably has to enter user credentials upon the enrolment of the application, or upon installation or configuration of the application. Upon initiating the method according to the first aspect, the user is requested to enter user credentials. These user credentials preferably correspond or are equal to the user credentials as mentioned above for the application.

In an example, the user credentials used for authenticating the application are correlated with the user credentials requested by the authorization server by the further step of:
- performing, by the authorization server, a lookup of the user credentials obtained upon requested by the authorization server in a lookup table comprising corresponding user credentials used for authenticating the application for each user credential obtained upon requested by the authorization server, and the step of sending, by the authorization server, a command comprises sending, by the authorization server, the command to the application registered with the corresponding user credentials obtained through the lookup.

If the user credentials are not the same during enrolment and/or use of the application and upon request by the authorization server when the user tries to access the restricted content, the method according to the first aspect preferably also comprises a step of performing a lookup in a lookup table or database in which user credentials are stored. Upon the lookup the credentials of the application and those requested upon trying to access the restricted content are matched from the table. In an example, the user may use a username and password combination for authenticating the application and use a telephone number upon the request by the authorization server. The lookup table will provide, upon lookup, which username and which password belong to the entered telephone number for sending the command to the instance of the application to which the corresponding username is registered.

In an example, the pre-configured personal authentication procedure corresponds with the pre-configured personal authentication procedure for unlocking a screen lock of an operating system of the communication device.

Preferably, the personal authentication procedure corresponds to the screen unlock procedure or routine configured at the operating system of the communication device. A preferable example is the use of a fingerprint unlock, a face-recognition unlock or a other type of unlock. These unlock routines have proven to be both fast, reliable, safe and have been set-up prior to performing the steps according to the first aspect. The advantage thereof is, that this unlock routines may act as a quick, well-known and proven technology which in the method according to the first aspect is used as a further factor of authorization. In known multiple or two factor authentications the user should enter a username, a password, a code, etc. These have to be remembered by the user. The user is less likely to forget their own telephone number. Since most modern (smart)phones have sophisticated unlock procedures build-in on operating system level, these are highly suitable to be used for granting users access to restricted content, i.e. to authenticate users. Since the application is not restricted to a particular use, the application may be used to authenticate all kinds of restricted content.

In an example, the pre-configured personal authentication procedure comprises a pre-configured personal authentication procedure dedicated for unlocking the application on the communication device from the inactive mode to the active mode.

The personal authentication procedure may alternatively also be setup dedicated for the application and may be different from the unlock procedure of the operating system. It may also comprise multiple procedures in which for example, user-id, username, password, pattern, facial-recognition, fingerprint, etc. are combined.

In an example, the pre-configured personal authentication procedure comprises an authentication procedure based on recognition of any one or more of the group of: a passcode, a fingerprint, a password, a facial-recognition, an audio-recognition, a biometrics, or a pattern recognition.

In an example, the user is authenticated in the application.

In an example, the restricted content is hosted by a webserver, and wherein the webserver preferably operated on the authorization server.

In an example, the restricted content comprises restricted content located on a secure and restricted area of a website hosted by the webserver.

Preferably, the restricted content may be hosted from a dedicated hosting server and the authorization may be done through a dedicated authorization server. Alternatively, these may also be running from the same physical or virtual server.

In an example, the step of requesting, by the authorization server, the user of the communication device to input user credentials, comprises requesting, by the authorization server, the user of the communication device to input user credentials arranged for authenticating the user, and preferably comprises requesting identity credentials for determining an identity of the user.

In an example, the acceptance code comprises a message for the authorization server to determine the successful transition of the application on the communication device from the inactive mode to the active mode.

In an example, the acceptance code comprises a one-time code for the authorization server to determine the successful transition of the application on the communication device from the inactive mode to the active mode.

In an example, the restricted content comprises personal user transaction web content to successfully complete a transaction of a product or service promoted through the server hosting the content.

In an example, the restricted content comprises merchant web content for offering services or product for transaction of the service or product by a user accessing the web content.

In an example, the communication device comprises one or more of the group of: a desktop computer, laptop computer, tablet and smartphone.

In second aspect, an authorization server is proposed, the authorization server configured for performing the steps of any of the descriptions above.

In third aspect, a webserver is proposed, the webserver for hosting restricted content, the webserver being configured provide a user of a communication device access to the restricted content upon authorization of the user by an authorization server according to the description above.

In fourth aspect, a computer program product is proposed comprising instructions for authorization of a user to restricted content which, when the program is executed by a computer, cause the computer to carry out the steps of the method according to the description above.

In an example, the computer program product is carried on an electrical carrier signal.

In an example, the computer program product is downloadable from a server of a telecommunication network.

In fifth aspect, a communication device such as a computer is proposed, smartphone or a tablet, comprising a memory, on which an application is stored and executed for authenticating the user with the user credentials according to the method steps described above.

In sixth aspect, a digital distribution platform server is proposed for distribution of applications to communication devices, wherein the platform comprises a memory storing an application, and a processing unit arranged for processing distribution of the application so the communication devices, wherein the application comprises a computer program product having computer program code which, when executed by the communication device authenticate the user with the user credentials according to the method described above.

The above-mentioned and other features and advantages of the disclosure will be best understood from the following description referring to the attached drawings which demonstrate non-limitative exemplary embodiments. In the drawings, like reference numerals denote identical parts or parts performing an identical or comparable function or operation. Herein shows:
- figure 1 a flowchart of the method steps according to the first aspect of the present disclosure;
- figure 2 a schematic view on the different components of an authorization system according to another aspect of the present disclosure.

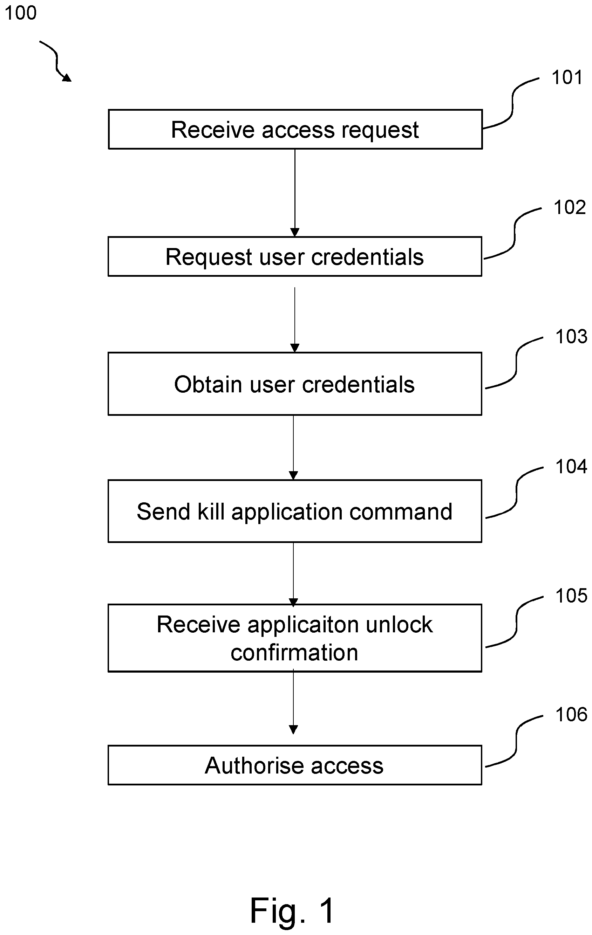

Figure 1 shows the minimal individual steps of the computer implemented method of authorizing a user of a communication device access to restricted content on a server. The method comprises at least the following steps:
- receiving 101, by an authorization server, a request from the communication device, to access the restricted content;
- requesting 102, by the authorization server, the user of the communication device to input user credentials;
- obtaining 103, by the authorization server, the user credentials from the communication device;
- sending 104, by the authorization server, to an application authenticated by the user with user credentials and running on the communication device, a command for forcing the application on the communication device to an inactive mode, and wherein the application is configured for user interaction in an active mode and for switching from the inactive mode to the active mode upon the user of the communication device to successfully complete a pre-configured personal authentication procedure;
- receiving 105, by the authorization server, from the application running on the communication device, an acceptance code, upon a successful transition of the application on the communication device from the inactive mode to the active mode;
- authorizing 106, by the server, upon receiving the acceptance code, the user of the communication device to access the restricted content.

The method is suitable to grant access to several types of restricted content such as restricted documents, websites, pictures, music, etc. This content is hosted on a server which preferably has a private and a public section. On the public section no authorization restrictions apply. On the private section there are. If the content is for example a website, the public section may comprise products that are offered through a webshop whereas the private section is the section in which the user has selected certain items to be put in the (virtual)shopping cart. Once the user proceeds and initiates a purchase procedure the user has to be identified. From that moment on, the user should no longer be anonymous. Whether or not the user is allowed to proceed may depend on the successful completion of the authorization according to steps 101-106 above. Generally speaking, this require the user to be identified and thus the user should be authenticated and not only authorized to purchase the goods. Completion of the purchase would require both a successful financial payment transaction and a transaction to be able to deliver the goods to the (address) of the user. Since both the delivering process and the financial payment may be provided through other, e.g. external, third party provides, there is no explicit need to identify the user by having his or her personal identity information such as first name, surname, address, etc. Therefore, if these are handled through third party providers, the authorization server according to this description may in its most simplified form only decide if the user is allowed access without having to know who that user is. Who is allowed access and who is not is defined by those users having an application installed on the communication device, e.g. a smartphone, which are authorized to do so through configuration at the application on the smartphone. If the user of the smartphone successfully enters the active mode of the application, he or she has successfully completed the application unlock procedure by which it is determined with high levers of certainty, that the user is righteous user of the smartphone and the righteous user registered in the application.

In a more specific embodiment, the user is not only authorized, but also authenticated, meaning that his or her identity is determined in the process. If for example the user wants to buy products from a web shop, the user will visit the public content of the web shop and select certain items to be put in the shopping cart. Once the user hits the purchase button, the user is directed to a private, e.g. personal, purchase section of the web shop. Usually, the user than has to enter their (user)name or email address and a password for that particular site. To prevent identity theft, users are encouraged to use strong, often long, passwords which are never reused, and only setup for that particular site. This is cumbersome. To this end, there have also been suggestions of password managers to help users keep track and maintain the large list of strong passwords. Such password managers however require additional software that should be compatible with the web browser. Moreover, some users have difficulties trusting third parties with their passwords. The proposed method does not have these drawbacks. Upon entering the private section of the web shop, i.e. when the authentication server receives a request to access the restricted content 101, the server requests the user to enter user credentials 102. These user credentials do not require a password or other difficult to remember credential, but in the preferred embodiment the telephone number of the user's smartphone may suffice. Once the server has received the phone number 103 it sends a command 104 to kill the dedicated application on the smartphone of the user. If the application was in an active mode, meaning that user interaction is allowed, the application will be shut-down, killed, suspended, or put into any other mode such that, prior to allowing the user to interact with the application, the user is prompted to perform a pre-configured authorization procedure, which preferably is done through a fingerprint unlock mechanism. If the user has successfully unlocked the application, the application sends a confirmation of the successful unlocking to the server. Upon receiving the confirmation of the successful unlock, the restricted content are released such that the user may contact the content. In case the authorization and the hosting of the restricted documents is operated through separate components, the authorization server may issue a token or other code or command to the server to indicate that the particular user is authorized, or the authorization server may issue a token or other code or command to the user which token may be used to retrieve the restricted content.

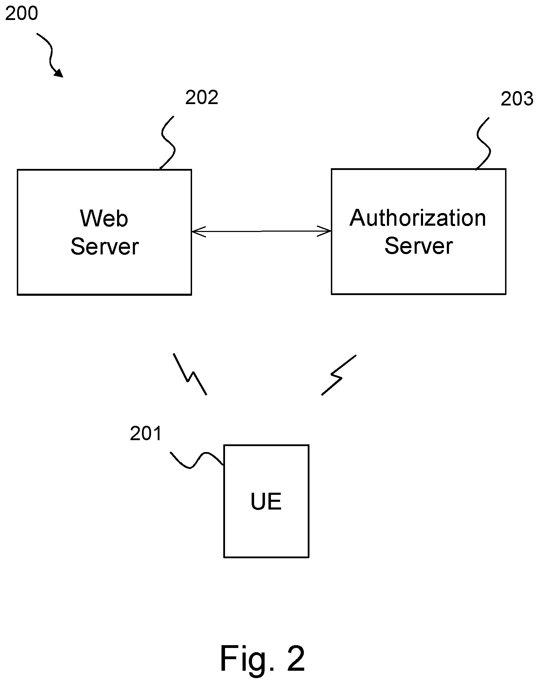

Figure 2 demonstrates several main components of the authorization or authentication system 200 according to an aspect of the present disclosure.

The system 200 is comprised of a communication device in the form of a mobile User Equipment 201. On the mobile UE 201 an operating system is running which has support for unlocking techniques such as pattern unlocking, code unlocking, password unlocking, face-recognition unlocking, voice-recognition unlocking, fingerprint unlocking, or a combination of the foregoing. The unlocking mechanisms are already setup or are at least required upon installation of the application such that the application may only be started in an active mode if one or more of these unlock procedures has been completed successfully.

The system has both a webserver 202 which hosts content of which part thereof is restricted, such as particular websites or parts of websites which require a user to authenticate and thus with a known identity of the user, or to at least authorize and thus with a recognized authorized device. In the latter it is not required that the identity of the user is known. Having for example a list of authorized user-id's is sufficient since performing a lookup on the user-id will return if the user-id is listed and thus authorized, or is not.

Communication takes place between the user through its mobile UE 201 and the authorization server 203. Communication also takes place between the user through its mobile UE 201 and the webserver 202 which hosts the restricted content. Finally, communication also takes place between both servers 202, 203, although this is not required. The communication between these server may also go through the mobile UE 201. The communication may take place over a mobile, or a fixed link.

The user initiates contact to access the restricted content on the webserver. Since access is restricted, the server should determine if the user is allowed access to the content. To this end, the webserver contacts the authorization server. This contact may take place by directly communication with the authorization server, sending a request to initiate an authorization procedure on the authorization server for that particular user, or via the mobile UE which directs to mobile UE to obtain a token from the authorization server which is required for accessing the content. The UE then communicates with the authorization server to complete the authorization procedure as indicated above.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that one, some or all method steps of may primarily be performed in a communication device such as a (smart) mobile User Equipment, or in a server which is located at a remote location, for example a back-end physical or virtual server in a dedicated, high security level data centre. Moreover, the person skilled in the art will readily appreciate that some of these steps may be performed by all element in parallel, or preferably, wherein each of the elements performs one or more of the method steps.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope thereof.

## Claims

1. A computer implemented method of authorizing a user of a communication device access to restricted content on a server, said method comprising the steps of:
- receiving, by an authorization server, a request from said communication device, to access said restricted content;
- requesting, by said authorization server, said user of said communication device to input user credentials;
- obtaining, by said authorization server, said user credentials from said communication device;
- sending, by said authorization server, to an application authenticated by said user with user credentials and running on said communication device, a command for forcing said application on said communication device to an inactive mode, and wherein said application is configured for user interaction in an active mode and for switching from said inactive mode to said active mode upon said user of said communication device to successfully complete a pre-configured personal authentication procedure;
- receiving, by said authorization server, from said application running on said communication device, an acceptance code, upon a successful transition of said application on said communication device from said inactive mode to said active mode;
- authorizing, by said server, upon receiving said acceptance code, said user of said communication device to access said restricted content.

2. The computer implemented method according to claim 1, wherein said user credentials comprise a mobile phone number registered to said communication device.

3. The computer implemented method according to any of the previous claims, wherein said user credentials comprises a username or user-id registered to said application running on said communication device.

4. The computer implemented method according to any of the previous claims, wherein said user credentials used for authenticating said application and said user credentials obtained upon requested by said authorization server comprise the same user credentials.

5. The computer implemented method according to any of the previous claims, wherein said user credentials used for authenticating said application are correlated with said user credentials requested by said authorization server by the further step of:
- performing, by said authorization server, a lookup of said user credentials obtained upon requested by said authorization server in a lookup table comprising corresponding user credentials used for authenticating said application for each user credential obtained upon requested by said authorization server, and said step of sending, by said authorization server, a command comprises sending, by said authorization server, said command to said application registered with said corresponding user credentials obtained through said lookup.

6. The computer implemented method according to any of the previous claims, wherein said pre-configured personal authentication procedure corresponds with said pre-configured personal authentication procedure for unlocking a screen lock of an operating system of said communication device.

7. The computer implemented method according to any of the previous claims, wherein said pre-configured personal authentication procedure comprises a pre-configured personal authentication procedure dedicated for unlocking said application on said communication device from said inactive mode to said active mode.

8. The computer implemented method according to any of the previous claims, wherein said pre-configured personal authentication procedure comprises an authentication procedure based on recognition of any one or more of the group of: a passcode, a fingerprint, a password, a facial-recognition, an audio-recognition, a biometrics, or a pattern recognition.

9. The computer implemented method according to any of the previous claims, wherein said user is authenticated in said application

10. The computer implemented method according to any of the previous claims, wherein said restricted content is hosted by a webserver, and wherein said webserver preferably operated on said authorization server, and preferably, wherein said restricted content comprises restricted content located on a secure and restricted area of a website hosted by said webserver.

11. The computer implemented method according to any of the previous claims, wherein said step of requesting, by said authorization server, said user of said communication device to input user credentials, comprises requesting, by said authorization server, said user of said communication device to input user credentials arranged for authenticating said user, and preferably comprises requesting identity credentials for determining an identity of said user.

12. The computer implemented method according to any of the previous claims, wherein said acceptance code comprises a message for said authorization server to determine said successful transition of said application on said communication device from said inactive mode to said active mode.

13. The computer implemented method according to any of the previous claims, wherein said acceptance code comprises a one-time code for said authorization server to determine said successful transition of said application on said communication device from said inactive mode to said active mode.

14. The computer implemented method according to any of the previous claims, wherein said restricted content comprises personal user transaction web content to successfully complete a transaction of a product or service promoted through said server hosting said content.

15. The computer implemented method according to any of the previous claims, wherein said restricted content comprises merchant web content for offering services or product for transaction of said service or product by a user accessing said web content.

## Patentansprüche

1. Computerimplementiertes Verfahren zur Autorisierung eines Benutzers eines Kommunikationsgerätezugriffs auf einen beschränkten Inhalt auf einem Server, wobei das Verfahren die folgenden Schritte umfasst:
- Empfangen, durch einen Autorisierungsserver, einer Anforderung von dem Kommunikationsgerät für den Zugriff auf den beschränkten Inhalt;
- Auffordern, durch den Autorisierungsserver, des Benutzers des Kommunikationsgeräts zur Eingabe von Benutzeranmeldeinformationen;
- Erhalten, durch den Autorisierungsserver, der Benutzeranmeldeinformationen von dem Kommunikationsgerät;
- Senden, durch den Autorisierungsserver an eine Anwendung, die von dem Benutzer mit Benutzeranmeldeinformationen authentifiziert wurde und auf dem Kommunikationsgerät ausgeführt wird, eines Befehls, um die Anwendung auf dem Kommunikationsgerät zu zwingen, in einen inaktiven Modus zu wechseln, und wobei die Anwendung für die Benutzerinteraktion in einem aktiven Modus und zum Umschalten von dem inaktiven Modus in den aktiven Modus konfiguriert ist, wenn der Benutzer des Kommunikationsgeräts ein vorkonfiguriertes persönliches Authentifizierungsverfahren erfolgreich abgeschlossen hat;
- Empfangen, durch den Autorisierungsserver von der auf dem Kommunikationsgerät ausgeführten Anwendung, eines Akzeptanzcodes bei erfolgreichem Übergang der Anwendung auf dem Kommunikationsgerät von dem inaktiven Modus in den aktiven Modus;
- Autorisieren, durch den Server nach Empfang des Akzeptanzcodes, des Benutzers des Kommunikationsgeräts für den Zugriff auf den beschränkten Inhalt.

2. Computerimplementiertes Verfahren nach Anspruch 1, wobei die Benutzeranmeldeinformationen eine Mobiltelefonnummer umfassen, die für das Kommunikationsgerät registriert ist.

3. Computerimplementiertes Verfahren nach einem der vorhergehenden Ansprüche, wobei die Benutzeranmeldeinformationen einen Benutzernamen oder eine Benutzer-ID umfassen, die für die auf dem Kommunikationsgerät ausgeführte Anwendung registriert ist.

4. Computerimplementierte Verfahren nach einem der vorhergehenden Ansprüche, wobei die zum Authentifizieren der Anwendung verwendeten Benutzeranmeldeinformationen und die auf Anforderung des Autorisierungsservers erhaltenen Benutzeranmeldeinformationen dieselben Benutzeranmeldeinformationen umfassen.

5. Computerimplementiertes Verfahren nach einem der vorhergehenden Ansprüche, wobei die zum Authentifizieren der Anwendung verwendeten Benutzeranmeldeinformationen mit den vom Autorisierungsserver angeforderten Benutzeranmeldeinformationen durch den folgenden weiteren Schritt korreliert werden:
- Durchführen, durch den Autorisierungsserver, eines Nachschlagevorgangs für die auf Anforderung des Autorisierungsservers erhaltenen Benutzeranmeldeinformationen in einer Nachschlagetabelle, die entsprechende Benutzeranmeldeinformationen enthält, die zum Authentifizieren der Anwendung für jede auf Anforderung des Autorisierungsservers erhaltene Benutzeranmeldeinformation verwendet werden, wobei der Schritt des Sendens, durch den Autorisierungsserver, eines Befehls das Senden, durch den Autorisierungsserver, des Befehls an die Anwendung umfasst, die mit den entsprechenden Benutzeranmeldeinformationen registriert ist, die durch den Nachschlagevorgang erhalten wurden.

6. Computerimplementiertes Verfahren nach einem der vorhergehenden Ansprüche, wobei das vorkonfigurierte persönliche Authentifizierungsverfahren dem vorkonfigurierten persönlichen Authentifizierungsverfahren zum Entsperren einer Bildschirmsperre eines Betriebssystems des Kommunikationsgeräts entspricht.

7. Computerimplementiertes Verfahren nach einem der vorhergehenden Ansprüche, wobei das vorkonfigurierte persönliche Authentifizierungsverfahren ein vorkonfiguriertes persönliches Authentifizierungsverfahren umfasst, das zum Entsperren der Anwendung auf dem Kommunikationsgerät vom inaktiven Modus in den aktiven Modus bestimmt ist.

8. Computerimplementiertes Verfahren nach einem der vorhergehenden Ansprüche, wobei das vorkonfigurierte persönliche Authentifizierungsverfahren ein Authentifizierungsverfahren umfasst, das auf der Erkennung eines oder mehrerer Elemente aus der folgenden Gruppe basiert: Passcode, Fingerabdruck, Passwort, Gesichtserkennung, Audioerkennung, Biometrie oder Mustererkennung.

9. Computerimplementiertes Verfahren nach einem der vorhergehenden Ansprüche, wobei der Benutzer in der Anwendung authentifiziert wird.

10. Computerimplementiertes Verfahren nach einem der vorhergehenden Ansprüche, wobei der beschränkte Inhalt von einem Webserver gehostet wird und wobei der Webserver vorzugsweise auf dem Autorisierungsserver betrieben wird und wobei der beschränkte Inhalt vorzugsweise einen beschränkten Inhalt umfasst, der sich in einem sicheren und beschränkten Bereich einer von dem Webserver gehosteten Website befindet.

11. Computerimplementiertes Verfahren nach einem der vorhergehenden Ansprüche, wobei der Schritt des Aufforderns, durch den Autorisierungsserver, des Benutzers des Kommunikationsgeräts zur Eingabe von Benutzeranmeldeinformationen das Auffordern, durch den Autorisierungsserver, des Benutzers des Kommunikationsgeräts zur Eingabe von Benutzeranmeldeinformationen umfasst, die zur Authentifizierung des Benutzers vorgesehen sind, und vorzugsweise das Anfordern von Identitätsanmeldeinformationen zum Bestimmen einer Identität des Benutzers umfasst.

12. Computerimplementiertes Verfahren nach einem der vorhergehenden Ansprüche, wobei der Akzeptanzcode eine Nachricht für den Autorisierungsserver umfasst, um den erfolgreichen Übergang der Anwendung auf dem Kommunikationsgerät von dem inaktiven Modus in den aktiven Modus zu bestimmen.

13. Computerimplementiertes Verfahren nach einem der vorhergehenden Ansprüche, wobei der Akzeptanzcode einen Einmalcode für den Autorisierungsserver umfasst, um den erfolgreichen Übergang der Anwendung auf dem Kommunikationsgerät von dem inaktiven Modus in den aktiven Modus zu bestimmen.

14. Computerimplementiertes Verfahren nach einem der vorhergehenden Ansprüche, wobei der beschränkte Inhalt einen persönlichen Webinhalt für Benutzertransaktionen umfasst, um eine Transaktion für ein Produkt oder eine Dienstleistung erfolgreich abzuschließen, die über den Server beworben werden, der den Inhalt hostet.

15. Computerimplementierte Verfahren nach einem der vorhergehenden Ansprüche, wobei der beschränkte Inhalt Händler-Webinhalte zum Anbieten von Diensten oder Produkten für die Transaktionsabwicklung des Dienstes oder Produkts durch einen Benutzer umfasst, der auf die Webinhalte zugreift.

## Revendications

1. Procédé mis en oeuvre par ordinateur pour autoriser un utilisateur d'un dispositif de communication à accéder à un contenu restreint sur un serveur, ledit procédé comprenant les étapes de :
- réception, par un serveur d'autorisation, d'une demande dudit dispositif de communication, pour accéder audit contenu restreint ;
- demande, par ledit serveur d'autorisation, audit utilisateur dudit dispositif de communication d'entrer des justificatifs d'identité d'utilisateur ;
- obtention, par ledit serveur d'autorisation, desdits justificatifs d'identité d'utilisateur à partir dudit dispositif de communication ;
- envoi, par ledit serveur d'autorisation, à une application authentifiée par ledit utilisateur avec des justificatifs d'identité d'utilisateur et s'exécutant sur ledit dispositif de communication, d'une instruction pour forcer ladite application sur ledit dispositif de communication à un mode inactif, et dans lequel ladite application est configurée pour une interaction utilisateur dans un mode actif et pour passer dudit mode inactif audit mode actif lorsque ledit utilisateur dudit dispositif de communication termine avec succès une procédure d'authentification personnelle préconfigurée ;
- réception, par ledit serveur d'autorisation, de ladite application s'exécutant sur ledit dispositif de communication, d'un code d'acceptation, lors d'un passage réussi de ladite application sur ledit dispositif de communication dudit mode inactif audit mode actif ;
- autorisation, par ledit serveur, dès réception dudit code d'acceptation, dudit utilisateur dudit dispositif de communication à accéder audit contenu restreint.

2. Procédé mis en oeuvre par ordinateur selon la revendication 1, dans lequel lesdits justificatifs d'identité d'utilisateur comprennent un numéro de téléphone mobile enregistré sur ledit dispositif de communication.

3. Procédé mis en oeuvre par ordinateur selon l'une des revendications précédentes, dans lequel lesdits justificatifs d'identité d'utilisateur comprennent un nom d'utilisateur ou un identifiant d'utilisateur enregistré dans ladite application s'exécutant sur ledit dispositif de communication.

4. Procédé mis en oeuvre par ordinateur selon l'une des revendications précédentes, dans lequel lesdits justificatifs d'identité d'utilisateur utilisés pour authentifier ladite application et lesdits justificatifs d'identité d'utilisateur obtenus à la demande dudit serveur d'autorisation comprennent les mêmes justificatifs d'identité d'utilisateur.

5. Procédé mis en oeuvre par ordinateur selon l'une des revendications précédentes, dans lequel lesdits justificatifs d'identité d'utilisateur utilisés pour authentifier ladite application sont corrélés auxdits justificatifs d'identité d'utilisateur demandés par ledit serveur d'autorisation par l'étape supplémentaire de :
- réalisation, par ledit serveur d'autorisation, d'une recherche desdits justificatifs d'identité d'utilisateur obtenus à la demande dudit serveur d'autorisation dans une table de recherche comprenant des justificatifs d'identité d'utilisateur correspondants utilisés pour authentifier ladite application pour chaque justificatif d'identité d'utilisateur obtenu à la demande dudit serveur d'autorisation, et ladite étape d'envoi, par ledit serveur d'autorisation, d'une instruction comprend l'envoi, par ledit serveur d'autorisation, de ladite instruction à ladite application enregistrée avec lesdits justificatifs d'identité d'utilisateur correspondants obtenus par ladite recherche.

6. Procédé mis en oeuvre par ordinateur selon l'une des revendications précédentes, dans lequel ladite procédure d'authentification personnelle préconfigurée correspond à ladite procédure d'authentification personnelle préconfigurée pour déverrouiller un verrouillage d'écran d'un système d'exploitation dudit dispositif de communication.

7. Procédé mis en oeuvre par ordinateur selon l'une des revendications précédentes, dans lequel ladite procédure d'authentification personnelle préconfigurée comprend une procédure d'authentification personnelle préconfigurée dédiée au déverrouillage de ladite application sur ledit dispositif de communication dudit mode inactif audit mode actif.

8. Procédé mis en oeuvre par ordinateur selon l'une des revendications précédentes, dans lequel ladite procédure d'authentification personnelle préconfigurée comprend une procédure d'authentification basée sur la reconnaissance de l'un quelconque ou de plusieurs du groupe constitué par : un code de déverrouillage, une empreinte digitale, un mot de passe, une reconnaissance faciale, une reconnaissance audio, une biométrie, ou une reconnaissance de formes.

9. Procédé mis en oeuvre par ordinateur selon l'une des revendications précédentes, dans lequel ledit utilisateur est authentifié dans ladite application.

10. Procédé mis en oeuvre par ordinateur selon l'une des revendications précédentes, dans lequel ledit contenu restreint est hébergé par un serveur Web, et dans lequel ledit serveur Web fonctionne de préférence sur ledit serveur d'autorisation, et de préférence, dans lequel ledit contenu restreint comprend un contenu restreint situé sur une zone sécurisée et restreinte d'un site Web hébergé par ledit serveur Web.

11. Procédé mis en oeuvre par ordinateur selon l'une des revendications précédentes, dans lequel ladite étape de demande, par ledit serveur d'autorisation, audit utilisateur dudit dispositif de communication d'entrer des justificatifs d'identité d'utilisateur, comprend la demande, par ledit serveur d'autorisation, audit utilisateur dudit dispositif de communication d'entrer des justificatifs d'identité d'utilisateur agencés pour authentifier ledit utilisateur, et comprend de préférence la demande de justificatifs d'identité pour déterminer une identité dudit utilisateur.

12. Procédé mis en oeuvre par ordinateur selon l'une des revendications précédentes, dans lequel ledit code d'acceptation comprend un message destiné audit serveur d'autorisation pour déterminer ledit passage réussi de ladite application sur ledit dispositif de communication dudit mode inactif audit mode actif.

13. Procédé mis en oeuvre par ordinateur selon l'une des revendications précédentes, dans lequel ledit code d'acceptation comprend un code à usage unique pour ledit serveur d'autorisation afin de déterminer ledit passage réussi de ladite application sur ledit dispositif de communication dudit mode inactif audit mode actif.

14. Procédé mis en oeuvre par ordinateur selon l'une des revendications précédentes, dans lequel ledit contenu restreint comprend un contenu Web de transaction personnelle d'utilisateur pour mener à bien une transaction d'un produit ou d'un service promu via ledit serveur hébergeant ledit contenu.

15. Procédé mis en oeuvre par ordinateur selon l'une des revendications précédentes, dans lequel ledit contenu restreint comprend un contenu Web commercial pour offrir des services ou un produit pour une transaction dudit service ou produit par un utilisateur accédant audit contenu Web.
